# EUROPÄISCHE PATENTSCHRIFT

(11) **EP 0 375 973 B1**
(45) Veröffentlichungstag und Bekanntmachung des Hinweises auf die Patenterteilung: **06.09.1995**
(21) Anmeldenummer: 89122054.3
(22) Anmeldetag: 29.11.1989
(51) Int. Cl.: C08G 77/62, C04B 35/58

(54) **Polymere Chlorsilazane, Verfahren zu ihrer Herstellung sowie Verfahren zur Herstellung von Siliziumnitrid enthaltenden keramischen Materialien**
Polymeric chlorosilazanes, process for preparing them and process for making ceramic materials containing silicon nitride
Polymères de chlorosilazane, procédé pour leur préparation et procédé de préparation de matières céramiques contenant du nitrure de silicium

(30) Priorität: 03.12.1988 DE 3840775
(43) Veröffentlichungstag der Anmeldung: 04.07.1990
(73) Patentinhaber: HOECHST AKTIENGESELLSCHAFT, 65926 Frankfurt am Main (DE)
(72) Erfinder: Vaahs, Tilo, Dr., D-6233 Kelkheim(Taunus) (DE); Peuckert, Marcellus, Dr., D-6238 Hofheim am Taunus (DE); Brück, Martin, D-6238 Hofheim am Taunus (DE)

(56) Entgegenhaltungen:
- EP-A- 0 228 148
- EP-A- 0 266 918
- EP-A- 0 313 878
- DE-A- 3 736 914
- FR-A- 2 611 208
- US-A- 4 482 669

## Beschreibung

Die Erfindung betrifft neue polymere Chlorsilazane, ihre Herstellung, sowie ihre Weiterverarbeitung zu Siliziumnitrid enthaltendem keramischem Material.

Die Pyrolyse von Polysilazanen zu Siliziumnitrid enthaltendem keramischem Material wurde bereits in der Literatur (R.R. Wills et al., Ceramic Bulletin, Vol, 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669).

Aus DE-OS-3 736 914 ist die Herstellung von chlorfreien Polysilazanen bekannt, die vor der Pyrolyse durch Behandlung mit Elektronen- oder UV-Strahlen oder Erhitzen an Luft unschmelzbar gemacht werden müssen.

Die vorliegende Erfindung stellt neue Ausgangsmaterialien für Polysilazane zur Verfügung, nämlich polymere Chlorsilazane. Diese lassen sich durch Behandlung mit NH₃ in Polysilazane überführen.

Ein Gegenstand der vorliegenden Erfindung ist ein Verfahren gemäß Anspruch 1.

Vorzugsweise haben die Reste R und R¹ bis R⁵ 1 bis 3 C-Atome. Besonders bevorzugt ist R = R¹=R²=R³=R⁵=CH₃ und R⁴=CH₃ oder Vinyl.

Die als Ausgangsprodukte eingesetzten Oligosilazane der Formel (I) können dadurch erhalten werden, daß man ein 1,2-Bis(organyl-dichlorsilyl)ethan der Formel 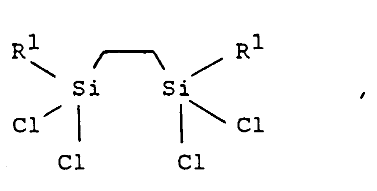
wobei R¹ die obige Bedeutung hat, mit überschüssigem NH₃ in einem Lösungsmittel umsetzt, analog dazu, wie dies in US-PS 4 482 669 für Methyldichlorsilan beschrieben ist (siehe dort insbesondere Spalten 4, 5, 7, 8). Dabei entsteht im allgemeinen ein Gemisch linearer und cyclischer Oligomerer mit verschiedenen Kettenlängen n. Die Herstellung des einfachsten Homologen mit R¹ = CH₃ ist bereits bekannt aus K.A. Andrianov et al., Izvestiya Akademii Nauk SSSR, Seriya Khimicheskaya No. 8, pp. 1878-1880 (1973).

Die als weitere Ausgangsprodukte eingesetzten Oligosilazane der Formel (II) können dadurch erhalten werden, daß man ein Dichlorhydridoalkylsilan der Formel RSiHCl₂, wobei R die obige Bedeutung hat, mit überschüssigem NH₃ in einem Lösungsmittel umsetzt, wie in US-PS 4 482 669 beschrieben (siehe dort insbesondere Spalten 4, 5, 7, 8). Dabei entsteht im allgemeinen ein Gemisch linearer und cyclischer Oligomerer mit verschiedenen Kettenlängen n. Die Oligomeren der Formeln (I) und (II) können dabei in jedem Verhältnis gemischt werden, im allgemeinen sollte das Molverhältnis 1:100 bis 100:1 sein.

Vorzugsweise beträgt bei der Umsetzung zum polymeren Chlorsilazan das molare Verhältnis der Reaktanten Chlorsilan:Monomereinheiten der Oligosilazane (n= 1) 0,1:1 bis 1:1, insbesondere 0,1:1 bis 0,4:1.

Zur Umsetzung der Reaktanten miteinander werden vorzugsweise die Oligosilazane der Formel (I) und (II) vorgelegt und mindestens eins der genannten Chlorsilane zugegeben. Da die Reaktion exotherm ist, wird beim Zusammengeben der Reaktanten vorzugsweise zunächst die Temperatur bei 30 bis 50°C gehalten. Anschließend erhitzt man auf Temperaturen von 100 bis 300°C, vorzugsweise auf 120 bis 250°C.

Das als Nebenprodukt gebildete NH₃ entweicht während der Reaktion teilweise. Nach beendeter Umsetzung wird der Rest im allgemeinen durch Anlegen von Vakuum aus dem Reaktionsgefäß entfernt.

Das bei der Reaktion ebenfalls entstehende NH₄Cl sublimiert im Verlauf der Reaktion zum größten Teil aus dem Reaktionsgemisch ab. Der eventuell verbliebene Rest des NH₄Cl kann durch Extraktion mit einem inerten organischen Lösungsmittel, wie n-Hexan, Toluol, Ether von dem erfindungsgemäß hergestellten polymeren Chlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete NH₄Cl unlöslich ist, kann letzteres durch Filtration abgetrennt werden. Die erfindungsgemäßen polymeren Chlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Das Verfahren kann auch kontinuierlich gestaltet werden.

Die hergestellten neuen polymeren Chlorsilazane haben eine molekulare Struktur, die durch die Formel (III) 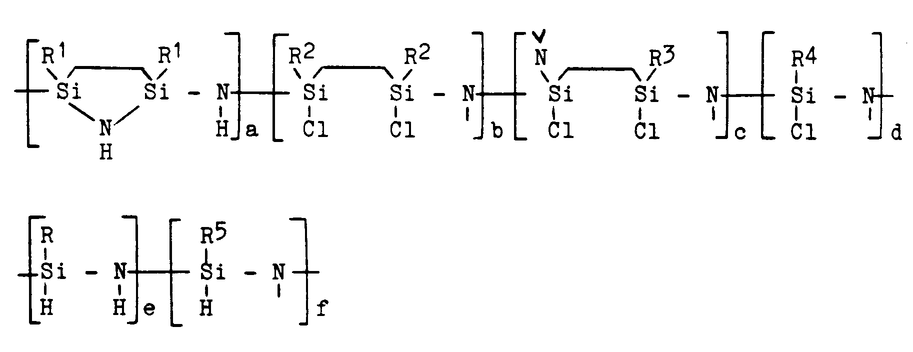
wiedergegeben werden kann, wobei die freien Valenzen an den Stickstoffatomen mit H-Atomen oder Silylresten R*SiXN〈 (X = H, Cl, N〈, CH₂CH₂Si〈̶) abgesättigt sind. R, R¹ bis R⁵ und R* bedeuten dabei C₁-C₆-Alkyl- oder C₂-C₆-Alkenylgruppen, vorzugsweise mit 1 bis 3 C-Atomen, und a, b, c, d, e, f bedeuten die Molfraktionen der jeweiligen Struktureinheiten. Es ist a + b + c + d + e + f = 1. Die Indizes a und e sind positiv und mindestens einer der Indizes b, c, d oder f ist positiv, wobei für positives f auch d positiv und R⁴=R⁵ ist. Besonders bevorzugt ist R=R¹=R²=R³=R⁵=R*=CH₃ und R⁴=CH₃ oder Vinyl.

Die polymeren Chlorsilazane haben eine netzartige Struktur. Ob die Molfraktionen b, c, d, f positive Werte oder den Wert 0 annehmen, hängt von den bei der Umsetzung mit den Oligosilazanen der Formeln (I) und (II) eingesetzten Chlorsilanen ab.

Wird die Mischung aus (I) und (II) nur mit R⁴SiCl₃ umgesetzt, so ist b=c=f=0; a , d und e nehmen positive Werte an.

Wird die Mischung aus (I) und (II) nur mit R⁵HSiCl₂ umgesetzt, so ist wieder b=c= 0; a,d,e und f nehmen positive Werte an. In diesem Fall ist in der Formel III der Rest R⁴=R⁵.

Wird die Mischung aus (I) und (II) nur mit Cl₂R²Si -CH₂CH₂-SiR²Cl₂ umgesetzt, so ist c=d=f=0; a, b und e nehmen positive Werte an.

Ein weiterer Gegenstand der vorliegenden Erfindung sind demgemäß polymere Chlorsilazane der Formel (III) wie verstehend definiert.

Einzelne Indices können auch den Wert null annehmen, wie oben näher erläutert. Die jeweils vorliegenden Werte von a,b,c,d,e,f können durch Integration der ¹H-NMR-Spektren und durch die Elementaranalyse ermittelt werden.

Im allgemeinen liegt die Summe aus a und e bei 0,1 bis 0,8; b,c,d,f liegen im allgemeinen bei 0.01 bis 0.4. Dabei ist a+b+c+d+e+f= 1.

Bevorzugt sind solche polymeren Chlorsilazane, für die die Summe aus a und e bei 0,7 bis 0,9 liegt, insbesondere bei 0,75 bis 0,85. Die bevorzugten Werte für b, c, d, f liegen bei 0,01 bis 0,3, insbesondere bei 0,01 bis 0,2. Diese Werte lassen sich über die genannten Analysenmethoden kontrollieren. Die eben genannten bevorzugten Werte für a, b, c, d, e, f haben sich besonders bewährt, wenn als Endprodukt der Pyrolyse (nach Umwandlung der polymeren Chlorsilazane in Polysilazane) eine Faser hergestellt werden soll.

Die neuen polymeren Chlorsilazane können durch Umsetzung mit Ammoniak ("Ammonolyse") in Polysilazane überführt werden, die wiederum durch Pyrolyse in Siliziumnitrid enthaltendes keramisches Material umgewandelt werden können.

Die Ammonolyse kann in flüssigem NH₃ erfolgen. Es ist jedoch vorteilhaft, sie in einem organischen Lösungsmittel durchzuführen. Geeignet sind alle Lösungsmittel, die sich inert gegenüber den polymeren Chlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymere Chlorsilan in Lösung vorzulegen und gasförmigen Ammoniak einzuleiten oder flüssigen Ammoniak hinzuzufügen. Wurden die erfindungsgemäßen polymeren Chlorsilazane in einem geeigneten organischen Lösungsmittel hergestellt, so kann die Ammonolyse ohne vorherige Abtrennung des NH₄Cl in diesem Lösungsmittel durchgeführt werden. Die Ammonolyse wird vorzugsweise mit einem Überschuß NH₃ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von -50 bis +100°C gearbeitet, vorzugsweise bei -20 bis +30°C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33°C bei der Verwendung von flüssigem NH₃ zu arbeiten.

Nach beendeter Ammonolyse wird ggf. das überschüssige NH₃ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polysilazane unmittelbar als weiße Pulver erhalten. Die Polysilazane sind in den obigen organischen Lösungsmitteln löslich, so daß diese sowohl für das Beschichten von Oberflächen als auch für die Herstellung von Fasern verwendet werden können.

Die Polysilazane können durch Pyrolyse in inerter Stickstoff- oder Argonatmosphäre bei Temperaturen von 800 bis 1200°C zu amorphen, dichten Materialien pyrolysiert werden, die im wesentlichen aus Si, N und C bestehen und in Spuren auch H und O enthalten können. Bei Pyrolysetemperaturen oberhalb 1200°C, etwa im Bereich von 1200°C bis 1400°C, entstehen teilamorphe, mikrokristalline keramische Werkstoffe, die als kristalline Phase α-Si₃N₄ enthalten.

Ein besonderer Vorteil ist, daß sich die Polysilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polysilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polysilazane ist die Herstellung dichter, gut haftender, amorpher oder mikrokristalliner keramischer Beschichtungen auf Metallen, insbesondere Stählen. Die Beschichtung erfolgt mit Hilfe einer Lösung des Polysilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200°C bzw. 1200 bis 1400°C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polysilazane mit gleichhoher keramischer Ausbeute von 70 bis 90 % statt in Inertgas auch in NH₃-Atmosphäre pyrolysieren. Dabei resultiert ein praktisch kohlenstofffreier, glasklarer, farbloser Werkstoff. Bei der Pyrolyse in NH₃ bei 1000°C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200°C) oder kristallinem Si₃N₄ (Pyrolyse oberhalb 1200°C, insbesondere oberhalb 1300°C). Die Pyrolyse in NH₃ läßt sich auf alle nach den oben beschriebenen Formgebungsverfahren hergestellten Formkörper, also aus Pulvern geformte Körper, Fasern, Beschichtungen anwenden.

Ein weiterer Gegenstand der Erfindung ist somit ein Verfahren zur Herstellung von Siliziumnitrid enthaltendem keramischem Material, dadurch gekennzeichnet, daß man die oben erwähnten, polymeren Chlorsilazane mit Ammoniak bei -50 bis +100°C umsetzt und das dabei gebildete Polysilazan in inerter Stickstoff- oder Argonatmosphäre oder in Ammoniakatmosphäre bei 800 bis 1400°C pyrolysiert.

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

Ein weiterer Gegenstand der vorliegenden Erfindung ist demgemäß ein Verfahren zur Herstellung von Siliziumnitrid enthaltendem keramischem Material, dadurch gekennzeichnet, daß man die oben erwähnten polymeren Chlorsilazane mit Ammoniak bei 0 bis +300°C umsetzt und das Umsetzungsprodukt in NH₃-Atmosphäre bei 800 - 1400°C pyrolysiert.

In diesem Fall, wo also das intermediär gebildete Polysilazan nicht isoliert wird, muß die Formgebung natürlich bereits auf der Stufe der polymeren Chlorsilazane erfolgen, d.h. mit diesen werden bereits Fasern oder Beschichtungen oder Formkörper hergestellt, die dann mit NH₃ umgesetzt und pyrolysiert werden.

### Versuchsbericht

1. Herstellung des 1,2-Bis(methyldichlorsilyl)ethans der Formel 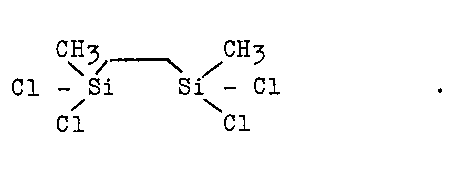
   Mit Hilfe einer Hydrosilylierung wurden zwei Moleküle Methyldichlorsilan (CH₃)HSiCl₂ an ein Molekül Ethin HCCH addiert. Dazu leitete man gasförmiges Ethin in vorgelegtes Toluol als Lösungsmittel ein. Zu dieser Lösung gab man 0.5 ml einer 0.05 molaren Lösung von Hexachloroplatinsäure in Chloroform. Man erhitzte auf 100°C und tropfte langsam Methyldichlorsilan zu (Sdp. 45°C). Dabei wurde ständig Ethin eingeleitet. Der Verlauf der Reaktion wurde über die Temperatur des Reaktionsgemisches verfolgt. Sank sie unter 80°C, so lag zuviel nicht reagiertes Methyldichlorsilan vor, welches man dann vor weiterem Zutropfen zuerst abreagieren ließ. Die Ausbeute an 1,2-Bis(methyldichlorsilyl)ethan war nahezu 100 %, und die Lösung konnte ohne Aufarbeitung für die Herstellung des Oligosilazanes verwendet werden. Der Gehalt an Chlorsilan ließ sich leicht mit Hilfe des ¹H-NMR-Spektrums feststellen.
   Bevorzugt sind möglichst geringe Anteile an Lösungsmittel. Völlig lösungsmittelfrei ließ sich die Verbindung herstellen, wenn von vornherein 1,2-Bis(methyldichlorsilyl)ethan vorgelegt wurde, um die notwendige Reaktionstemperatur zu erreichen.
2. Herstellung des Oligosilazans der Formel (I) mit R¹=CH₃: 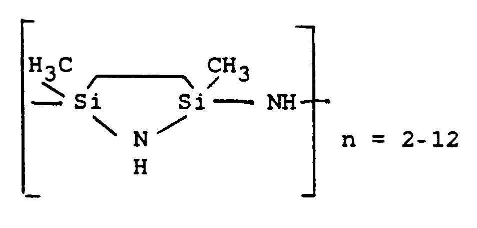 In 1400 ml absolutem THF wurden 150 ml (181 g; 0.71 mol) Cl₂(CH₃)SiCH₂CH₂Si(CH₃)Cl₂ gelöst, dann wurde 3 Stunden lang Ammoniak eingeleitet (Einleitegeschwindigkeit 0.5 l/min). Durch Kühlen mit einem Eisbad wurde die Temperatur in einem Bereich von 0°C bis 15°C gehalten. Zur Vervollständigung der Reaktion wurde eine Stunde bei Raumtemperatur gerührt und anschließend unter N₂ das Ammoniumchlorid abgetrennt. Der Niederschlag wurde 2 mal mit je 200 ml trockenem THF gewaschen und die vereinigten Filtrate unter reduziertem Druck eingeengt. Man erhielt das Oligosilazan in Form eines klaren, leicht beweglichen Öls in einer Ausbeute von 82 g (80 % der Theorie).
3. Herstellung des Oligohydridomethylsilazans der Formel (II) mit R=CH₃: (CH₃SiHNH)ₙ
   In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 20 bis 25°C gehalten. Zur Vervollständigung der Reaktion wurde 1 h bei Raumtemperatur gerührt und anschließend unter Argon das Ammoniumchlorid abgetrennt. Der Niederschlag wurde 2mal mit je 350 ml THF gewaschen und die vereinigten THF-Lösungen unter reduziertem Druck eingeengt. Man erhielt ein klares, leicht bewegliches Öl von (CH₃SiHNH)ₙ in einer Ausbeute von 44,5 g = 78 % der Theorie.

### Beispiel:

Die Oligosilazane der Formeln (I) mit R¹=CH₃ (114 g; 0,79 mol) und (II) mit R=CH₃ (90 g; 1,52 mol) wurden gemischt und in einen 1-l-Rundkolben mit Rückflußkühler und angeschlossener Kühlfalle gegeben. Hierzu tropfte man unter Rühren und leichter Kühlung 204 ml (227,5 g; 1,98 mol) Methyldichlorsilan CH₃SiHCl₂. Die Reaktionsmischung wurde innerhalb von 3 h 30 min auf 220 °C erhitzt und 90 min bei dieser Temperatur gehalten. Die Leichtsieder CH₃SiHCl₂ und CH₃SiH₂Cl (154 g) fanden sich in der Kühlfalle. Nach dem Abkühlen wurde die Reaktionsmischung in 400 ml n-Pentan gelöst und von unlöslichen Ammoniumsalzen über eine G4-Fritte getrennt. Das Pentan wurde anschließend bei Unterdruck und erhöhter Temperatur vollständig entfernt, wobei nach dem Abkühlen eine klare, leicht gelbliche, glasartige Substanz (210 g) erhalten wurde.
¹H-NMR-Daten:
SiH δ=4,5 - 5,0 ppm (br) Intensität: 1,2

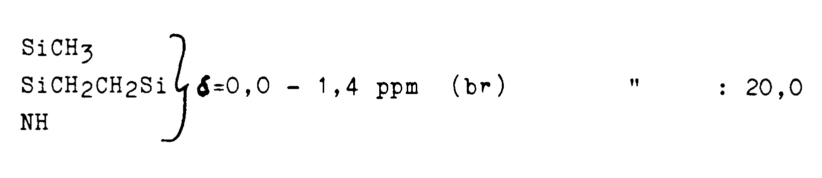

| Analysedaten: | | | | | |
|---|---|---|---|---|---|
| gefunden: | Si 38,8 %, | N 14,4 %, | Cl 17,6 %, | O < 0,3 % | |
| berechnet: | Si 37,3 %, | N 18,7 %, | Cl 12,2 %, | C 25,2 %, | H 6,6 % |

Das Polymere besitzt die Formel (III) mit
R = R¹ = R⁴ = R⁵ = CH₃ und den Indices
a = 0,4, d = 0,36, e = 0,14, f = 0,1, b = c = 0:

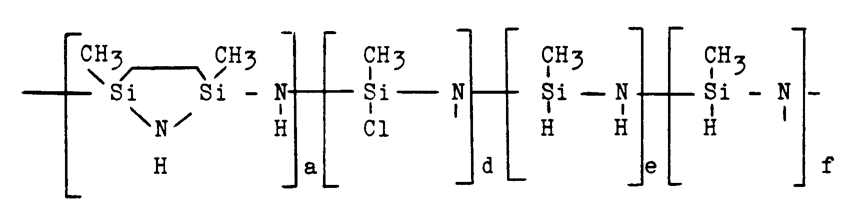

## Patentansprüche

1. Verfahren zur Herstellung von polymeren Chlorsilazanen, der Formel (III) 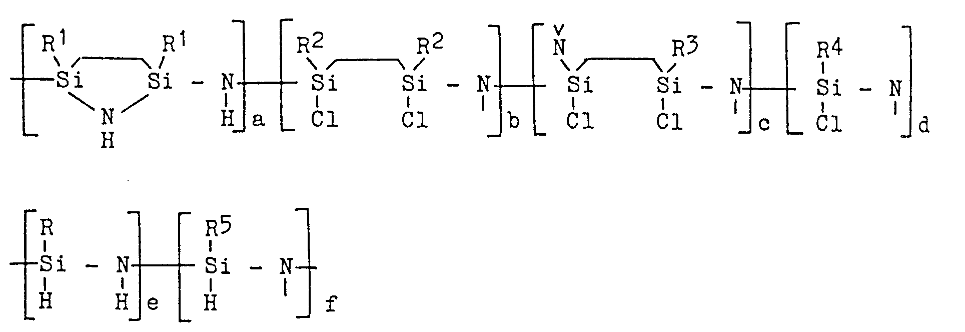 wobei die freien Valenzen der Stickstoffatome mit H-Atomen oder Silylresten R*SiXN〈 (X= H,Cl,N〈, CH₂CH₂Si〈̶) abgesättigt sind und wobei R, R¹ bis R⁵ und R* C₁-C₆-Alkyl- oder C₂-C₆-Alkenylgruppen und a,b,c,d,e,f die Molfraktionen der jeweiligen Struktureinheiten bedeuten, wobei a+b+c+d+e+f = 1 ist, a und e positiv sind und mindestens einer der Indizes b, c, d oder f positiv ist, wobei für positives f auch d positiv und R⁴ = R⁵ ist dadurch gekennzeichnet, daß man eine Mischung aus Oligosilazanen der allgemeinen Formel (I) 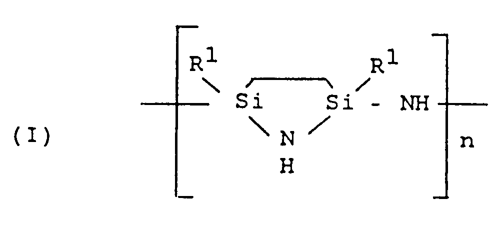 worin n 2 bis 12 ist, und Oligosilazanen der Formel (II) (RSiHNH)m, worin m 3 bis 12 ist, mit mindestens einem der Chlorsilane Cl₂R²Si-CH₂-CH₂-SiR²Cl₂, Cl₃Si-CH₂-CH₂-SiR³Cl₂, R⁴SiCl₃ oder R⁵SiHCl₂ bei 30°C bis 300°C umsetzt, wobei R und R¹ bis R⁵ C₁-C₆-Alkyl- oder C₂-C₆-Alkenylgruppen sind, die gleich oder verschieden sein können.

2. Verfahren nach Anspruch 1, dadurch gekennzeichnet, daß R und R¹ bis R⁵ C₁-C₃-Alkyl- oder C₂-C₃-Alkenylgruppen bedeuten.

3. Verfahren nach Anspruch 1, dadurch gekennzeichnet, daß R=R¹=R²=R³=R⁵=CH₃ und R⁴=CH₃ oder Vinyl ist.

4. Verfahren nach einem der Ansprüche 1 bis 3, dadurch gekennzeichnet, daß das molare Verhältnis der Chlorsilane zu den Monomereinheiten der Oligosilazane 0.1:1 bis 1:1 beträgt.

5. Verfahren nach einem der Ansprüche 1 bis 4, dadurch gekennzeichnet, daß man beim Zusammengeben der Reaktanten eine Temperatur von 30°C bis 50°C einhält und anschließend auf 100°C bis 300°C erhitzt.

6. Polymere Chlorsilazane der Formel (III) 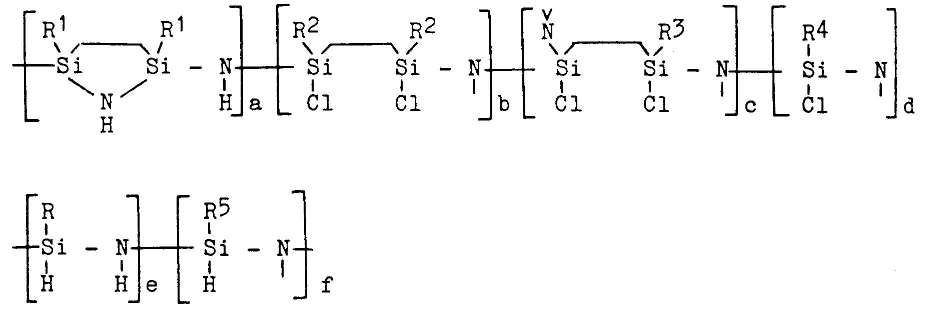 wobei die freien Valenzen der Stickstoffatome mit H-Atomen oder Silylresten R*SiXN〈 (X= H,Cl,N〈, CH₂CH₂Si〈̶) abgesättigt sind und wobei R, R¹ bis R⁵ und R* C₁-C₆-Alkyl- oder C₂-C₆-Alkenylgruppen und a,b,c,d,e,f die Molfraktionen der jeweiligen Struktureinheiten bedeuten, wobei a+b+c+d+e+f = 1 ist, a und e positiv sind und mindestens einer der Indizes b, c, d oder f positiv ist, wobei für positives f auch d positiv und R⁴=R⁵ ist.

7. Polymere Chlorsilazane nach Anspruch 6, dadurch gekennzeichnet, daß R, R¹ bis R⁵ und R* C₁-C₃-Alkyl- oder C₂-C₃-Alkenylgruppen sind.

8. Polymere Chlorsilazane nach Anspruchs 6, dadurch gekennzeichnet, daß R=R¹=R²=R³=R⁵=R*= CH₃ und R⁴=CH₃ oder Vinyl ist.

9. Verfahren zur Herstellung von Siliziumnitrid enthaltendem keramischem Material, dadurch gekennzeichnet, daß man polymere Chlorsilazane gemäß einem der Ansprüche 6 bis 8 mit Ammoniak bei -50 bis +100°C umsetzt und das dabei gebildete Polysilazan in inerter Stickstoff- oder Argonatmosphäre oder in Amoniakatmosphäre bei 800 bis 1400°C pyrolysiert.

10. Verfahren zur Herstellung von Siliziumnitrid enthaltendem keramischem Material, dadurch gekennzeichnet, daß man polymere Chlorsilazane gemäß einem der Ansprüche 6 bis 8 mit Ammoniak bei 0 bis 300°C umsetzt und das Umsetzungsprodukt in NH₃-Atmosphäre bei 800 - 1400°C pyrolysiert.

## Claims

1. A process for the preparation of polymeric chlorosilazanes of formula (III) 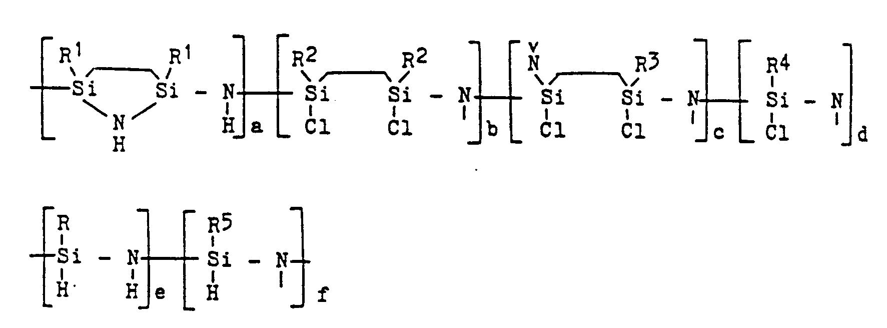 where the free valencies on the nitrogen atoms are saturated with H atoms or silyl radicals R*SiXN〈 (X = H, Cl, N〈, CH₂CH₂Si〈̶) and where R, R¹ to R⁵ and R* are C₁-C₆ alkyl or C₂-C₆ alkenyl groups and a, b, c, d, e and f are the mol fractions of the respective structural units, where a+b+c+d+e+f = 1, a and e are positive and at least one of the indices b, c, d or f is positive, where if f is positive d is also positive and R⁴ = R⁵, which comprises reacting a mixture of oligosilazanes of formula (I) 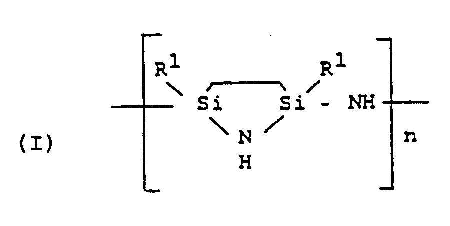 in which n is 2 to 12, and oligosilazanes of formula (II), (RSiHNH)ₘ, in which m is 3 to 12, with at least one of the chlorosilanes Cl₂R²Si-CH₂-CH₂-SiR²Cl₂, Cl₃Si-CH₂-CH₂-SiR³Cl₂, R⁴SiCl₃ or R⁵SiHCl₂ at 30°C to 300°C, where R and R¹ to R⁵ are C₁-C₆ alkyl or C₂-C₆ alkenyl groups which can be identical or different.

2. The process as claimed in claim 1, wherein R and R¹ to R⁵ are C₁-C₃ alkyl or C₂-C₃ alkenyl groups.

3. The process as claimed in claim 1, wherein R = R¹ = R² = R³ = R⁵ = CH₃ and R⁴ = CH₃ or vinyl.

4. The process as claimed in any of claims 1 to 3, wherein the molar ratio of the chlorosilanes to the monomer units of the oligosilazanes is 0.1:1 to 1:1.

5. The process as claimed in any of claims 1 to 4, wherein the temperature is kept at 30°C to 50°C when the reactants are brought together and the reaction mixture is then heated to 100°C to 300°C.

6. A polymeric chlorosilazane of formula (III) 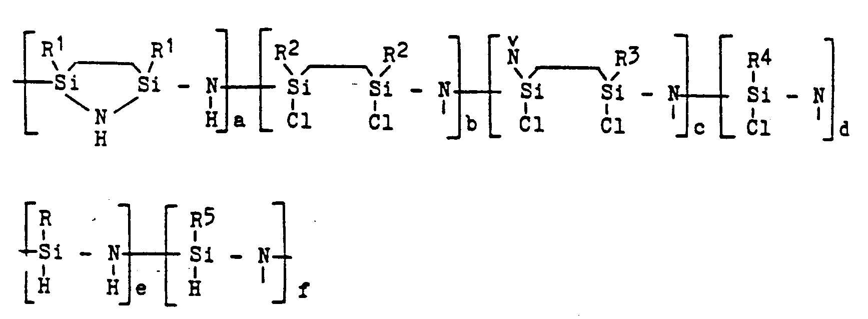 where the free valencies on the nitrogen atoms are saturated with H atoms or silyl radicals R*SiXN〈 (X = H, Cl, N〈, CH₂CH₂Si〈̶) and where R, R¹ to R⁵ and R* are C₁-C₆ alkyl or C₂-C₆ alkenyl groups and a, b, c, d, e and f are the mol fractions of the respective structural units, where a+b+c+d+e+f = 1, a and e are positive and at least one of the indices b, c, d or f is positive, where if f is positive d is also positive and R⁴ = R⁵.

7. A polymeric chlorosilazane as claimed in claim 6, wherein R, R¹ to R⁵ and R* are C₁-C₃ alkyl or C₂-C₃ alkenyl groups.

8. A polymeric chlorosilazane as claimed in claim 6, wherein R = R¹ = R² = R³ = R⁵ = R* = CH₃ and R⁴ = CH₃ or vinyl.

9. A process for the manufacture of ceramic material containing silicon nitride, which comprises reacting polymeric chlorosilazanes as claimed in any of claims 6 to 8 with ammonia at -50 to +100°C and pyrolyzing the polysilazane formed in an inert nitrogen or argon atmosphere or in an ammonia atmosphere at 800 to 1400°C.

10. A process for the manufacture of ceramic material containing silicon nitride, which comprises reacting polymeric chlorosilazanes as claimed in any of claims 6 to 8 with ammonia at 0 to 300°C and pyrolyzing the reaction product in an NH₃ atmosphere at 800 - 1400°C.

## Revendications

1. Procédé pour la préparation de chlorosilazanes polymères de formule (III) 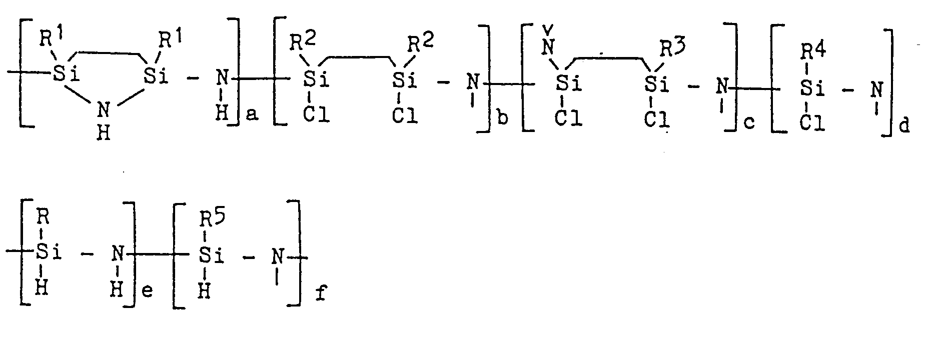 les valences libres sur les atomes d'azote étant saturées par les atomes de H ou des radicaux silyle R*SiXN 〈 (X=, H,Cl,N〈, CH₂CH₂Si〈̶) et R, R¹ à R⁵ et R* représentant des groupes alkyle en C₁-C₆ ou alcényle en C₂-C₆ et a, b, c, d, e, f représentant des fractions molaires des unités de structure respectives, a+b+c+d+e+f étant = 1, a et e étant positifs et au moins l'un des indices b, c, d ou f étant positif, pour f positif d étant aussi positif et R⁴ = R⁵, caractérisé en ce qu'on fait réagir un mélange d'oligosilazanes de formule générale (I) 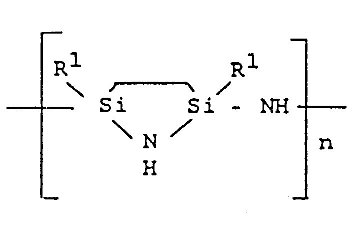 dans laquelle n va de 2 à 12, et d'oligosilazanes de formule (II) (RSiHNH)ₘ, dans laquelle m va de 3 à 12, avec au moins l'un des chlorosilane Cl₂R²Si-CH₂-CH₂-SiR²Cl₂, Cl₃Si-CH₂CH₂-SiR³Cl₂, R⁴SiCl₃ ou R⁵SiHCl₂, à une température de 30°C à 300°C, R et R¹ à R⁵ représentant des groupes alkyle en C₁-C₆ ou alcényle en C₂-C₆ qui peuvent être identiques ou différents.

2. Procédé selon la revendication 1, caractérisé en ce que R et R¹ à R⁵ représentent des groupes alkyle en C₁-C₃ ou alcényle en C₂-C₃.

3. Procédé selon la revendication 1, caractérisé en ce que R=R¹=R²=R³=R⁵=CH₃ et R⁴=CH₃ ou le vinyle.

4. Procédé selon l'une des revendications 1 à 3, caractérisé en ce que le rapport molaire du chlorosilane aux unités monomères des oligosilazanes est de 0,1:1 à 1:1.

5. Procédé selon l'une des revendications 1 à 4, caractérisé en ce que lors de la réunion des réactants, on maintient une température de 30°C à 50°C et ensuite on chauffe à 100°C à 300°C.

6. Chlorosilazanes polymères de formule (III) 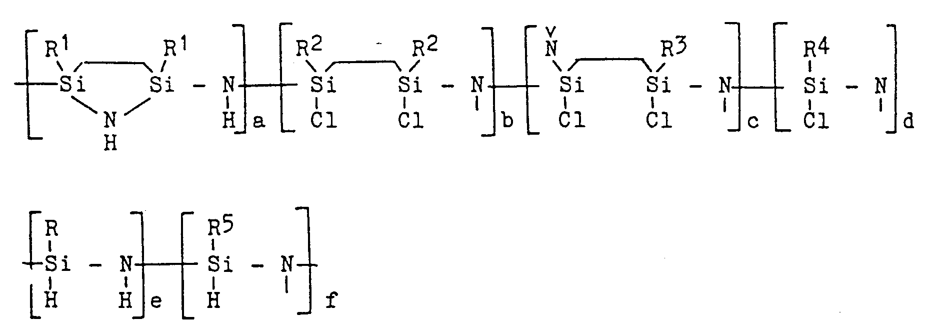 les valences libres sur les atomes d'azote étant saturées par les atomes de H ou des radicaux silyle R*SiXN 〈 (X=, H,Cl,N〈, CH₂CH₂Si〈̶) et R, R¹ à R⁵ et R* représentant des groupes alkyle en C₁-C₆ ou alcényle en C₂-C₆ et a, b, c, d, e, f représentant des fractions molaires des unités de structure respectives, a+b+c+d+e+f étant = 1, a et e étant positifs et au moins l'un des indices b, c, d ou f étant positif, pour f positif d étant aussi positif et R⁴ = R⁵.

7. Chlorosilazanes polymères selon la revendication 6, caractérisés en ce que R, R¹ à R⁵ et R* représentent des groupes alkyle en C₁-C₃ ou alcényle en C₂-C₃.

8. Chlorosilazanes polymères selon la revendication 6, caractérisés en ce que R=R¹=R²=R³=R⁵=R*=CH₃ et R⁴=CH₃ ou le vinyle.

9. Procédé pour la préparation de matière céramique contenant du nitrure de silicium, caractérisé en ce qu'on fait réagir les chlorosilazanes polymères selon l'une des revendications 6 à 8 avec l'ammoniac, à une température de -50 à +100°C et qu'on pyrolyse le polysilazane formé au cours cette opération sous une atmosphère inerte d'azote ou d'argon ou d'ammoniac à 800 à 1 400°C.

10. Procédé pour la préparation de matière céramique contenant du nitrure de silicium, caractérisé en ce qu'on fait réagir des chlorosilazanes polymères selon l'une des revendications 6 à 8 avec l'ammoniac à une température de 0 à 300°C et on pyrolyse le produit de réaction sous une atmosphère de NH₃ à 800 à 1 400°C.
